# EUROPÄISCHE PATENTSCHRIFT

(11) **EP 1 188 256 B1**
(45) Veröffentlichungstag und Bekanntmachung des Hinweises auf die Patenterteilung: **16.05.2012**
(21) Anmeldenummer: 00943608.0
(22) Anmeldetag: 16.05.2000
(51) Int. Cl.: H04B 7/005

(54) **VERFAHREN ZUR REGELUNG DER SENDELEISTUNG IN EINEM FUNKSYSTEM UND ENTSPRECHENDES FUNKSYSTEM**
METHOD FOR ADJUSTING TRANSMISSION POWER IN A RADIO SYSTEM AND CORRESPONDING RADIO SYSTEM
PROCEDE DE REGLAGE DE LA PUISSANCE D'EMISSION DANS UN SYSTEME RADIO, ET SYSTEME RADIO CORRESPONDANT

(30) Priorität: 23.06.1999 DE 19928763
(43) Veröffentlichungstag der Anmeldung: 20.03.2002
(73) Patentinhaber: Gigaset Communications GmbH, 81379 München (DE)
(72) Erfinder: RAAF, Bernhard, D-81475 München (DE)
(74) Vertreter: Michalski Hüttermann & Partner
(86) Internationale Anmeldenummer: PCT/DE2000/001542
(87) Internationale Veröffentlichungsnummer: WO 2001/001599

(56) Entgegenhaltungen:
- EP-A- 0 923 202
- EP-A2- 1 032 140
- DE-A- 19 847 678
- GB-A- 2 341 294

## Beschreibung

Die vorliegende Erfindung betrifft ein Verfahren nach dem oberbegriff des Anspruches 1 zur Regelung der Sendeleistung in einem Funksystem sowie ein entsprechendes Funksystem nach dem Oberbegriff des Anspruches 12, insbesondere ein entsprechendes Mobilfunksystem.

Die Regelung der Sendeleistung stellt bei Mobilfunksystemen ein wichtiges Leistungsmerkmal dar, um mögliche Interferenzen zwischen den einzelnen Verbindungen unterbinden und somit die Kapazität und Qualität der Verbindungen verbessern zu können und um die mittlere Sendeleistung reduzieren und bestmöglich an die Bedürfnisse anpassen sowie Verluste über die Übertragungskanäle wenigstens teilweise ausregeln zu können.

Zu diesem Zweck wird in dem Mobilfunksystem empfangsseitig das von einem Sender übertragene Signal ausgewertet, um davon abhängig Informationen für die Leistungsregelung erzeugen und an den Sender übermitteln zu können, der daraufhin die Sendeleistung entsprechend den Leistungsregelungs- oder Leistungseinstellinformationen einstellt.

Die Übertragung der Leistungseinstellinformation erfolgt dabei analog zur Übertragung der eigentlichen Kommunikationsinformationen abhängig von dem jeweiligen Mobilfunksystem eingebunden in eine vorgegebene Rahmen- und Zeitschlitzstruktur, d.h. die Informationen werden in mehreren sequentiell übertragene Rahmen übermittelt, wobei jeder Rahmen eine bestimmte Anzahl von Zeitschlitzen aufweist. Hinsichtlich bekannter Mobilfunksysteme wurde vorgeschlagen, den Sender des Mobilfunksystems in einem als 'Slotted Mode' oder 'Compressed Mode' bezeichneten Modus zu betreiben, wobei in diesem Fall die zu übertragenden Informationen innerhalb bestimmter Rahmen in komprimierter Form an einem Empfänger übertragen werden, um in dem entsprechenden Rahmen einen als 'Idle Slot' bezeichneten Abschnitt von Informationsbits freimachen zu können, der anschließend für Zwischenfrequenzmessungen, beispielsweise zur Vorbereitung eines Handovers zwischen verschiedenen Mobilfunksystemen, verwendet werden kann. Zur Komprimierung müssen die Informationen in einem verkürzten Zeitintervall übertragen werden.

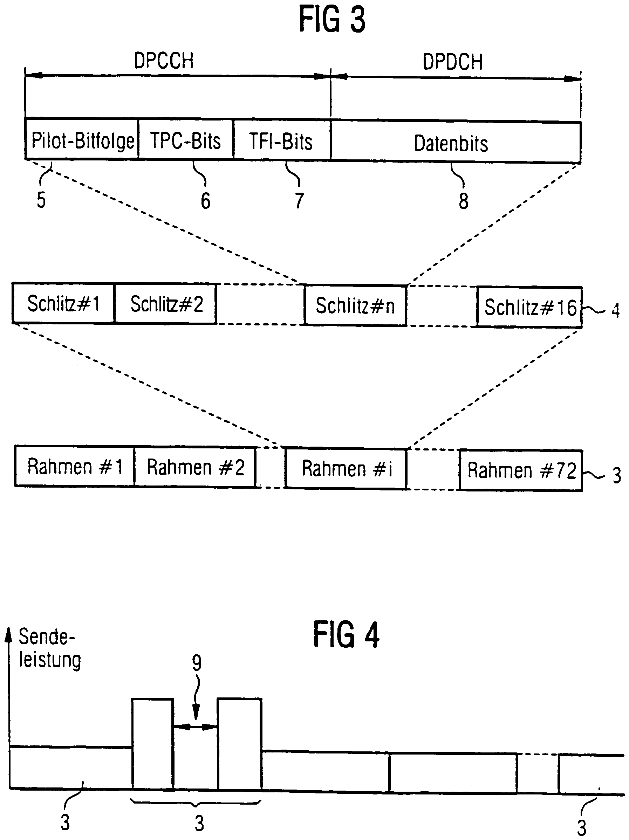

Das Prinzip der Komprimierung ist schematisch in Fig. 4 dargestellt, wobei mehrere sequentiell übertragene Rahmen 3 dargestellt sind, die jeweils eine identische Rahmendauer, beispielsweise 10ms, besitzen. Bezüglich des in Fig. 4 gezeigten zweiten Rahmens 3 ist der 'Slotted Mode' angewendet, d.h. in diesem Rahmen werden die Informationen in komprimierter Form übertragen, so daß ein 'Idle Slot' 9 auftritt, in dem keine Informationen übertragen werden. Wie ebenfalls in Fig. 4 gezeigt, kann während dieses im 'Slotted Mode' betriebenen Rahmens 3 die Sendeleistung erhöht werden, um eine von dem 'Slotted Mode' nicht beeinträchtigte Übertragungsqualität zu erzielen.

Durch den 'Slotted Mode' wird jedoch das Prinzip einer schnellen Leistungsregelung unterbrochen. In modernen Mobilfunksystemen wird in jedem Zeitschlitz eine Leistungseinstellinformation für den Sender erzeugt, so daß eine relativ schnelle Anpassung der Sendeleistung möglich ist. Während des zuvor beschriebenen 'Idle Slots' können jedoch keine derartigen Leistungseinstellinformationen übertragen werden. Dies hat einerseits eine höhere Fehlerrate der Bits der Leistungseinstellinformation zur Folge, und andererseits ist mit einer erhöhten Abweichung der augenblicklichen Sendeleistung vom Sollwert zu rechnen.

Zum Beheben dieses mit dem 'Slotted Mode' verbundenen Problems wird beispielsweise vorgeschlagen, zur Leistungsrege lung die Energie sogenannter Pilotbits nach dem 'Slotted Mode' vorübergehend zu erhöhen, um eine korrekte Decodierung der Leistungseinstellinformation, welche in der Regel lediglich durch ein entsprechendes Bit mit bestimmten Vorzeichen gebildet ist, zu ermöglichen. Die Pilotbits dienen zur Schätzung der Kanalimpulsantwort während einer sogenannten Trainingssequenz und entsprechen einem bekannten Bitmuster. Die in diesem Dokument beschriebene Vorgehensweise zur Leistungsregelung im 'Slotted Mode' ist jedoch relativ aufwendig und kompliziert.

Der vorliegenden Erfindung liegt daher die Aufgabe zugrunde, ein verbessertes Verfahren zum Regeln der Sendeleistung in einem Funksystem sowie ein entsprechendes Funksystem vorzuschlagen, wobei insbesondere auch in dem zuvor beschriebenen 'Slotted Mode' oder 'Compressed Mode' eine zuverlässige Regelung der Sendeleistung möglich sein soll.

Diese Aufgabe wird erfindungsgemäß durch ein Verfahren mit den Merkmalen des Anspruches 1 bzw. ein Funksystem mit den Merkmalen des Anspruches 12 gelöst. Die Unteransprüche definieren jeweils bevorzugte Ausführungsformen der vorliegenden Erfindung.

Erfindungsgemäß wird vorgeschlagen, in aufeinanderfolgenden Zeitschlitzen dieselbe Leistungseinstellinformation zu übertragen, so daß im Sender die Sendeleistung mit einer größeren Zuverlässigkeit eingestellt werden kann, indem zur Einstellung der Sendeleistung die während dieser Zeitschlitze empfangenen Leistungseinstellinformationen in Kombination ausgewertet werden.

Die Erfindung eignet sich insbesondere für eine Anwendung im sogenannten 'Slotted Mode', wobei nach einem 'Idle Slot', d.h. nach einem Abschnitt eines Rahmens, in dem keine Informationen übertragen werden, mehrmals dieselbe Leistungseinstellinformation übertragen wird. Die Erfindung ist jedoch nicht auf diese Anwendung im 'Slotted Mode' beschränkt, d.h. die Erfindung kann grundsätzlich auch auf Zeitschlitze angewendet werden, die nicht einem 'Idle Slot' folgen, um auch in diesen Fällen eine zuverlässigere Leistungsregelung zu ermöglichen. Dabei ist dieser Ansatz insbesondere dann interessant, wenn sich die Übertragungsbedingungen des jeweiligen Übertragungskanals nicht schnell ändern (z.B. bei einer langsamen Fortbewegungsgeschwindigkeit einer Mobilstation).

Insbesondere wird vorgeschlagen, nach einem 'Idle Slot' beispielsweise den Signalrauschabstand des Empfangssignals auszuwerten, davon abhängig eine entsprechende Leistungseinstellinformation zu erzeugen und diese während der nächsten beiden, dem 'Idle Slot' unmittelbar folgenden Zeitschlitze an den Sender zu übertragen. Der Sender wertet dann die während dieser beiden Zeitschlitze empfangenen Leistungseinstellinformationen aus und stellt die Sendeleistung unter Berücksichtigung beider Leistungseinstellinformationen ein, so daß einen gegebenenfalls anhand der ersten Leistungseinstellinformation getroffene Einstellung der Sendeleistung noch korrigiert werden kann.

Das der vorliegenden Erfindung zugrundeliegende Prinzip kann sowohl im Uplink, d.h. für die Übertragung von Kommunikationsinformationen von einer Mobilstation zu einer Basisstation, als auch im Downlink, d.h. für die entgegengesetzte Richtung, oder auch gleichzeitig für beide Richtungen angewendet werden.

Nach Empfang der Leistungseinstellinformation des dem 'Idle Slot' unmittelbar folgenden ersten Zeitschlitzes kann die Sendeleistung zunächst konstant gehalten werden, so daß eine Veränderung erst nach Erhalt der Leistungseinstellinformation des zweiten Zeitschlitzes erfolgt.

In der Regel umfaßt die während jedes Zeitschlitzes übertragene Leistungseinstellinformation lediglich ein Bit, wobei die Schrittweite für die Veränderung der Sendeleistung digital codiert wird. Stattdessen kann jedoch die Schrittweite auch analog codiert werden, d.h. die Schrittweite hängt dann beispielsweise direkt analog von der Abweichung des im Empfänger gemessenen Empfangssignalpegels relativ zu einem vorgegebenen Referenzwert ab.

Die Erfindung erfordert keinerlei Änderung des vorgegebenen Zeitschlitzformats. Durch die Kombination der aufeinanderfolgend übertragenen Leistungseinstellinformationen wird eine Verbesserung des zur Verfügung stehenden Bit-Signal-Rauschverhältnisses (E_{b}/N₀) erzielt. Mit diesem erhöhten Bit-Signal-Rauschverhältnis kann eine größere Schrittweite bei der Leistungsregelung realisiert werden, ohne daß die Gefahr besteht, durch eine erhöhte Bitfehlerrate häufiger die Sendeleistung in die falsche Richtung zu verändern.

Die Erfindung kann auf verschiedene Arten von Funksystemen angewendet werden, wobei jedoch die vorliegende Erfindung insbesondere für Mobilfunksysteme mit Codemultiplexverfahren (Code Division Multiple Access, CDMA) interessant ist.

Die Erfindung wird nachfolgend näher unter Bezugnahme auf die Zeichnung anhand bevorzugter Ausführungsbeispiele erläutert.
Fig. 1 zeigt eine Darstellung zur Erläuterung des der Erfindung zugrundeliegenden Prinzips anhand eines bevorzugten Ausführungsbeispiels,
Fig. 2 zeigt eine allgemeine schematische Darstellung zur Erläuterung der Informationsübertragung in einem Mobilfunksystem,
Fig. 3 zeigt die Rahmen- und Zeitschlitzstruktur für eine sogenannte Downlink-Verbindung gemäß dem derzeitigen Stand der UMTS-Normgebung, und
Fig. 4 zeigt eine Darstellung zur Erläuterung der Rahmenstruktur im sogenannten 'Slotted Mode'.

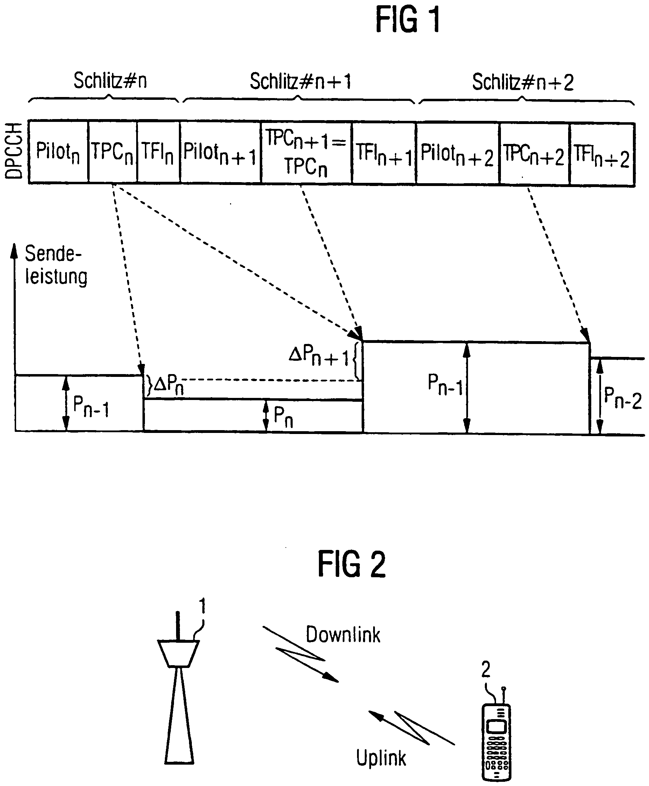

Zunächst soll anhand Fig. 2 das Prinzip der Leistungsregelung näher erläutert werden, wobei in Fig. 2 die Kommunikation zwischen einer Basisstation 1 und einer Mobilstation 2 eines Mobilfunksystems dargestellt ist. Eine Verbindung von der Basisstation 1 zum Mobilteil 2 wird als Downlink oder Forward Link bezeichnet, während eine Verbindung von dem Mobilteil 2 zu der Basisstation 1 als Uplink oder Reverse Link bezeichnet wird. Zur Leistungsregelung des Downlinks wird in der Mobilstation 2 das jeweilige Empfangssignal ausgewertet und davon abhängig eine Leistungseinstellinformation oder Leistungsregelungsinformation erzeugt und an die Basisstation 1 zurückgesendet, so daß die Basisstation 1 die Sendeleistung entsprechend einstellen kann. Für die Regelung des Uplinks wird das Empfangssignal in der Basisstation 1 ausgewertet und dort die Leistungsregelungsinformation erzeugt und die Mobilstation 2 zur Leistungsanpassung angewiesen.

Die Übertragung der Leistungsregelungsinformation erfolgt dabei abhängig von dem jeweiligen Mobilfunksystem eingebunden in eine vorgegebene Rahmenstruktur.

In Fig. 3 ist als Beispiel die Rahmen- und Zeitschlitzstruktur für eine Downlink-Verbindung eines gemäß einem Codemultiplex-Vielfachzugriffsverfahren (CDMA, Code Division Multiple Access) betriebenen Mobilfunksystems dargestellt. Die in Fig. 3 gezeigte Rahmen- und Zeitschlitzstruktur entspricht insbesondere einem auch als DPCH (Dedicated Physical Channel) bezeichneten UMTS-Mobilfunkkanal (Universal Mobile Telecommunication System) gemäß dem derzeitigen Stand der UMTS-Standardisierung. UMTS ist die Bezeichnung für Mobilfunksysteme der dritten Generation mit dem Ziel eines weltweiten, universalen Mobilfunkstandards. Gemäß dem UMTS-Mobilfunkstandard ist als Vielfachzugriffsverfahren das sogenannte WCDMA-Verfahren (Wideband Code Division Multiple Access) vorgesehen.

Die in Fig. 3 gezeigte Rahmenstruktur mit einer Dauer von 720 ms umfaßt insbesondere 72 identisch aufgebaute Rahmen 3 mit einer Rahmendauer von 10 ms, wobei jeder Rahmen wiederum jeweils 16 Zeitschlitze 4 mit einer Zeitschlitzdauer von 0,625 ms aufweist. Alternativ kann ein Rahmen 3 auch fünfzehn entsprechend längere Zeitschlitze 4 umfassen. Im folgenden wird jedoch von dem ersten Fall ausgegangen. Jeder Zeitschlitz 4 umfaßt auf einen logischen Steuerkanal (DPCCH, Dedicated Physical Control Channel) und einen logischen Datenkanal (DPDCH, Dedicated Physical Data Channel) aufgeteilte Informationen. Der DPCCH-Abschnitt umfaßt eine Pilot-Bitfolge 5 sowie eine sogenannte TPC-Information (Transmitter Power Control) 6 und eine TFI-Information (Transmitter Format Identifier) 7. Der DPDCH-Abschnitt umfaßt Nutzdatenbits 8.

Die Pilot-Bitfolge 5 dient zur Schätzung der Kanalimpulsantwort während einer sogenannten Trainingssequenz und entspricht einem bekannten Bitmuster. Durch Vergleich des Empfangssignals mit der bekannter. Pilot-Bitfolge kann der Empfänger die Kanalimpulsantwort des Mobilfunkkanals ermitteln bzw. schätzen.

Die TFI-Information 7 dient als Formatkennung für den jeweiligen Empfänger. Die TFI-Bits werden nach dem aktuellen WCDMA-Standard mit Hilfe eines eigenen Codierungsverfahrens geschützt und durch Interleaving über einen ganzen Rahmen (Zeitdauer 10 ms) verteilt. Umfaßt die TFI-Information 7 jedes Zeitschlitzes beispielsweise zwei Bits, ergeben sich pro Rahmen, der 16 Zeitschlitze umfaßt, insgesamt 2*16 = 32 TFI-Bits, die durch ein sogenanntes biorthogonales Codierverfahren codiert werden.

Die TPC-Information 6 stellt den von dem Empfänger erzeugten und an den Sender übermittelten Befehl zur Einstellung der Sendeleistung dar. Zu diesem Zweck wird im Empfänger die Empfangsleistung oder der Signalrauschabstand des Empfangssignals mit einem vorgegebenen Referenzwert verglichen und abhängig von der Abweichung der Wert für den Leistungseinstellbefehl ermittelt. D.h. bei Überschreiten des Referenzwerts durch die Empfangsleistung wird ein Befehl zur Verringerung der Sendeleistung erzeugt, während ein Befehl zur Erhöhung der Sendeleistung erzeugt wird, wenn die Empfangsleistung den vorgegebenen Referenzwert unterschreitet. Abhängig von dem Vergleichsergebnis wird von dem Empfänger somit ein digitaler oder binärer Einstellbefehl an den Sender übertragen. Dabei ist ein Befehl zur Erhöhung der Sendeleistung (Power Up-Befehl) mit einer 1 codiert, während ein Befehl zur Verringerung der Sendeleistung (Power Down-Befehl) mit einer 0 codiert ist. In jedem Fall wird der Einstellbefehl nach einer entsprechenden Modulation an den Sender übertragen. Nach dem derzeit diskutierten WCDMA-Standard für UMTS-Mobilfunksysteme erfolgt die Übertragung durch eine QPSK-Modulation (Quadrature Phase Shift Keying), wodurch die binäre 1 bzw. 0 auf den Wert -1 bzw. +1 abgebildet wird, mit anschließender Spreizung des Leistungsregelungssignals.

Die Leistungseinstell- oder Leistungsregelungsinformation besteht somit in der Regel lediglich aus einem Bit, welches angibt, ob sendeseitig die Sendeleistung erhöht oder verringert werden soll. Um dieses Bit mit einer ausreichend geringen Fehlerwahrscheinlichkeit übertragen zu können, wird das Bit innerhalb des TPC-Feldes 6 wiederholt übertragen. Die in Fig. 3 gezeigte TPC-Information umfaßt demzufolge beispielsweise drei mit einem identischen Informationsgehalt nacheinander übertragene Bits.

Durch den zuvor beschriebenen 'Slotted Mode' oder 'Compressed Mode' wird jedoch trotz der wiederholten Übertragung der TPC-Bits innerhalb des TPC-Feldes 6 die Fehlerrate erhöht. Um dem entgegen zu wirken, wird vorgeschlagen, nach einem 'Idle Slot' 9 (vgl. Fig. 4) innerhalb eines Rahmens 3 dieselbe TPC-Information 6 wiederholt zu übertragen, wobei dies insbesondere während der dem 'Idle Slot' 9 unmittelbar darauffolgenden beiden Zeitschlitze 4 geschieht.

Zur Erläuterung dieses Prinzips ist in Fig. 1 beispielhaft die Struktur des bereits zuvor erwähnten DPCCH-Steuerkanals (vgl. Fig. 3) eines Rahmens dargestellt, wobei angenommen wird, daß der in Fig. 1 gezeigte Zeitschlitze #n der einem 'Idle Slot', d.h. einem nicht mit Informationen belegten Abschnitt, unmittelbar folgende Zeitschlitz ist. Unterhalb der Zeitschlitzstruktur ist der Verlauf der Sendeleistung dargestellt, welche im Sender in Abhängigkeit von der jeweils übermittelten TPC-Information eingestellt wird.

Im Empfänger wird zu Ermittlung der während des Zeitschlitzes #n zu übertragenden TPC- oder Leistungseinstellinformation der Signalrauschabstand des augenblicklich empfangenen Signals des Senders gemessen, mit einem Referenzwert verglichen und davon abhängig die TPC-Information TPCₙ erzeugt. Diese TPC-Information wird während des Zeitschlitzes #n an den Sender übertragen, dort decodiert und zur Einstellung der Sendeleistung umgesetzt. Dabei kann im Sender zunächst auf den Empfang der während des darauffolgenden Zeitschlitzes #n+1 übertragenen TPC-Information TPCₙ₊₁ gewartet werden, ehe die Sendeleistung endgültig auf den gewünschten Wert eingestellt wird, so daß es sich empfiehlt, im Sender nach Empfang der TPC-Information TPCₙ die Sendeleistung vorerst gemäß einer (normalen) Nominalschrittweite, die einem normalen E₀/N₀-Verhältnis entspricht, einzustellen. Diese Schrittweite ist in Fig. 1 durch ΔPₙ angedeutet und entspricht der Differenz zwischen der augenblicklichen Sendeleistung Pₙ₋₁ und der nach Empfang der TPC-Information TPCₙ eingestellten Sendeleistung Pₙ. Als Schrittweite ΔPₙ nach Empfang der Leistungseinstellinformation TPCₙ kann auch der Wert 0 gewählt werden, um die Sendeleistung bis zum Erhalt der Leistungseinstellinformation TPCₙ₊₁ konstant zu halten, da dann eine Entscheidung bzgl. der einzustellenden Sendeleistung mit größerer Zuverlässigkeit getroffen werden kann.

Zur Erzeugung der während des nächsten Zeitschlitzes #n+1 zu übertragenden TPC-Information wird nicht erneut der Signalrauschabstand des Sendesignals ausgewertet, sondern stattdessen einfach die TPC-Information des vorhergehenden Zeitschlitzes wiederholt, d.h. es gilt TPCₙ₊₁ = TPCₙ. Auf diese Weise kann das Verhältnis E_{b/}N₀ erhöht werden, da der Sender nach Empfang des Zeitschlitzes #n+1 die TPC-Information TPCₙ₊₁ mit der bereits zuvor empfangenen TPC-Information TPCₙ kombinieren kann und somit in der Lage ist, die Sendeleistung auf den gewünschten Wert mit größerer Zuverlässigkeit einzustellen. Erkennt beispielsweise der Sender, daß die infolge der zuletzt empfangenen TPC-Information getroffene Entscheidung falsch war, kann diese nunmehr korrigiert werden. Wie in Fig. 1 gezeigt ist, kann der Sender die Sendeleistung nunmehr auch mit einer größeren Schrittweite verändern, wodurch das Risiko verringert wird, daß nach einer falschen TPC-Entscheidung eine weitere Verschlechterung herbeigeführt wird. In Fig. 1 ist dies durch ΔPₙ₊₁ angedeutet, wobei sowohl ΔPₙ als auch ΔPₙ₊₁ die Schrittweite in Bezug auf die nach dem 'Idle Slot' eingestellte Sendeleistung Pₙ₋₁ angeben.

Das zuvor erwähnte Prinzip der wiederholten Übertragung derselben TPC-Information während aufeinanderfolgender Zeitschlitze kann nicht nur auf die erste Zeit nach einer Unterbrechung der Leistungsregelung durch den 'Idle Slot', sondern auch während einer normalen Verbindung angewendet werden. Dabei ist dies insbesondere für solche Fälle interessant, in denen die zeitliche Änderung des Übertragungskanals nicht so schnell ist, da dann der mit dem Verfahren verbundene Nachteil einer erhöhten Verzögerung bei der Leistungsregelung durch den Vorteil einer besseren Qualität der übermittelten Leistungseinstellinformation mehr als ausgeglichen werden kann. Da die kleinste Schrittweite für die Leistungsregelung derzeit 1dB ist und in Mobilstationen aus Implementierungsgründen kleinere Werte ungünstig sind, ist dies eine Möglichkeit, die Geschwindigkeit der Leistungsregelung zu reduzieren.

Weiterhin kann die Erfindung angewendet werden, um die Leistungseinstellinformation mit einer geringeren Anzahl an TPC-Bits zu übertragen. Dadurch wird zwar das Bit-Signal-Rauschverhältnisses (E_{b}/N₀) verringert, wobei dies jedoch durch den Vorteil der Erfindung, nämlich durch eine erhöhte Übertragungssicherheit, kompensiert werden kann. Die Verwendung von weniger TPC-Bits ist insofern vorteilhaft, als daß dadurch der sogenannte Overhead reduziert und somit die Effizienz gesteigert werden kann.

Darüber hinaus kann die vorliegende Erfindung auch beim sogenannten 'Soft Handover' vorteilhaft angewendet werden. Dabei sendet bzw. empfängt die Mobilstation 2 Daten von bzw. zu mehreren Basisstationen 1. Zur Detektion der Nutzdaten werden die Empfangssignale aller Verbindungen kombiniert, wodurch die Leistung jeder einzelnen Verbindung reduziert werden kann. Die TPC-Leistungseinstellbefehle können jedoch im allgemeinen nicht kombiniert werden, da die von verschiedenen Basisstationen 1 (über einen Downlink) gesendeten TPC-Leistungseinstellbefehle nicht identisch sein müssen. Da die TPC-Leistungseinstellbefehle auch sehr schnell ausgewertet werden müssen, ist ihre Kombination zudem im Uplink meistens nicht möglich. Ansonsten würden intolerante Verzögerungen auftreten, welche durch die Weitergabe der entsprechenden Informationen von einer Basisstation 1 zu einer anderen Basisstation 1 hervorgerufen werden. Ein Ausweg ist hier neben einer Erhöhung der Energie oder Anzahl der TPC-Bits der Einsatz der vorliegenden Erfindung.

Schließlich kann die zuvor beschriebene Erfindung auch mit dem Prinzip einer analogen Übertragung der Schrittweite zur Einstellung der Sendeleistung kombiniert werden. In diesem Fall wird die im Sender einzustellende Sendeleistung bzw. die entsprechende Schrittweite nicht digital, sondern analog codiert, d.h. die Leistungseinstellinformation wird jeweils analog abhängig von der Abweichung des gemessenen Empfangssignalpegels von einem vorgegebenen Referenzwert, beispielsweise dem Empfangspegel der Pilotbits, eingestellt. Eine doppelt so große Abweichung des Empfangssignalpegels vom Referenzwert hat demnach eine doppelt so große Schrittweite zur Folge.

## Patentansprüche

1. Verfahren zur Regelung der Sendeleistung in einem Funksystem,
wobei zwischen einem Sender (2; 1) und einem Empfänger (1; 2) Informationen in eine Rahmen- und Zeitschlitzstruktur (3, 4) eingebettet übertragen werden,
wobei ein von dem Empfänger (1; 2) über einen Übertragungskanal des Funksystems empfangenes Signal des Senders (2; 1) ausgewertet und davon abhängig in jedem Zeitschlitz (4) eine Leistungseinstellinformation (6) erzeugt und an den Sender (2; 1) gesendet wird, und
wobei in dem Sender (2; 1) die Sendeleistung in Abhängigkeit von der Leistungseinstellinformation (6) eingestellt wird,
**dadurch gekennzeichnet,**
**daß** von dem Empfänger (1; 2) in mehreren aufeinanderfolgenden Zeitschlitzen (4) eine identische Leistungseinstellinformation (6) an den Sender (2; 1) übertragen wird, wobei für die zu übertragende Leistungseinstellinformation (6) nicht erneut das von dem Empfänger (1; 2) empfangene Signal des Senders (2; 1) ausgewertet wird, sondern stattdessen die Leistungseinstellinformation (6) des vorhergehenden Zeitschlitzes wiederholt wird.

2. Verfahren nach Anspruch 1,
wobei in einem bestimmten Rahmen (3) die Informationen in komprimierter Form übertragen werden, so daß innerhalb dieses Rahmens (3) ein nicht mit Informationen belegter Abschnitt (9) vorhanden ist,
**dadurch gekennzeichnet,**
**daß** von dem Empfänger (1; 2) nach einem nicht mit Informationen belegten Abschnitt (9) eines Rahmens (3) in mehreren darauffolgenden Zeitschlitzen (4) eine identische Leistungseinstellinformation (6) an den Sender (2;1) übertragen wird.

3. Verfahren nach Anspruch 2,
**dadurch gekennzeichnet,**
**daß** von dem Empfänger (1; 2) nach dem nicht mit Informationen belegten Abschnitt (9) in zwei darauffolgenen Zeitschlitzen (4) eine identische Leistungseinstellinformation (6) an den Sender (2;1 ) übertragen wird.

4. Verfahren nach Anspruch 3,
**dadurch gekennzeichnet,**
**daß** in dem Sender (2; 1) die Sendeleistung in Abhängigkeit sowohl von der in dem ersten Zeitschlitz (4) nach dem nicht mit Informationen belegten Abschnitt empfangenen Leistungseinstellinformation (6) als auch von der in dem zweiten Abschnitt (9) nach dem nicht mit Informationen belegten Abschnitt (9) empfangenen Leistungseinstellinformation (6) eingestellt wird.

5. Verfahren nach Anspruch 3 oder 4,
**dadurch gekennzeichnet,**
**daß** erst nach der Übertragung der identischen Leistungseinstellinformation (6) in dem ersten und zweiten Zeitschlitz (4) nach dem nicht mit Informationen belegten Abschnitt (9) das von dem Empfänger (1; 2) empfangene Signal des Senders (2; 1) erneut ausgewertet und davon abhängig eine neue Leistungseinstellinformation erzeugt und in dem nächsten Zeitschlitz (4) an den Sender (2; 1) gesendet wird.

6. Verfahren nach einem der Ansprüche 3-5,
**dadurch gekennzeichnet,**
**daß** die Sendeleistung in dem Sender (2; 1) nach Empfang der in dem ersten Zeitschlitz (4) nach dem nicht mit Informationen belegten Abschnitt (9) übertragenen Leistungseinstellinformation um einen festen Betrag (ΔPₙ) verändert wird, und daß nach Empfang der während des zweiten Zeitschlitzs (4) nach dem nicht mit Informationen belegten Abschnitt (9) übertragenen Leistungseinstellinformation (6) unter Berücksichtigung der während des ersten Zeitschlitzes (4) nach dem nicht mit Informationen belegten Abschnitt (9) übertragenen Leistungseinstellinformation (6) ein Leistungsveränderungswert (ΔPₙ₊₁) ermittelt und die Sendeleistung in dem Sender (2; 1) entsprechend diesem Leistungsveränderungswert (ΔPₙ₊₁) relativ zu der vor der ersten Veränderung eingestellten Sendeleistung (Pₙ₊₁) verändert wird.

7. Verfahren nach Anspruch 6,
**dadurch gekennzeichnet,**
**daß** der feste Betrag (ΔPₙ) dem Wert Null entspricht.

8. Verfahren nach einem der vorhergehenden Ansprüche,
**dadurch gekennzeichnet,**
**daß** in dem Empfänger (1; 2) die Leistungseinstellinformation (6) analog abhängig von der Abweichung eines bestimmten ausgewerteten Parameters des empfangenen Signals von einem entsprechenden Referenzwert erzeugt wird.

9. Verfahren nach einem der Ansprüche 2-8,
**dadurch gekennzeichnet,**
**daß** auch in mehreren aufeinanderfolgenden Zeitschlitzen (4), welche nicht unmittelbar auf einen nicht mit Informationen belegten Abschnitt (9) folgen, identische Leistungseinstellinformationen (6) an den Sender (2; 1) übertragen werden, und daß in dem Sender (2; 1) die Sendeleistung unter Berücksichtigung der während dieser Zeitschlitze (4) empfangenen Leistungseinstellinformationen eingestellt wird.

10. Verfahren nach einem der Ansprüche 2-9,
**dadurch gekennzeichnet,**
**daß** nach einem nicht mit Informationen belegten Abschnitt (9) mehrmals in aufeinanderfolgenden Zeitschlitzen (4) eine identische Leistungseinstellinformation (6) an den Sender (2;1) übertragen wird, wobei die Anzahl der Wiederholungen jedes Mal unterschiedlich sind.

11. Verfahren nach einem der vorhergehenden Ansprüche,
**dadurch gekennzeichnet,**
**daß** das Verfahren während eines Soft Handovers in dem Mobilfunksystem angewendet wird.

12. Funksystem,
mit einem Sender (2; 1), und
mit einem Empfänger (1; 2) zum Empfangen eines über einen Übertragungskanal des Funksystems übertragenen Signals des Senders (2; 1) und zum Auswerten des empfangenen Signals, um davon abhängig eine Leistungseinstellinformation (6) zu erzeugen und an den Sender (2; 1) zu senden,
wobei der Sender (2; 1) derart ausgestaltet ist, daß er die Sendeleistung in Abhängigkeit von der Leistungseinstellinformation des Empfängers (1; 2) einstellt,
wobei zwischen dem Sender (2; 1) und dem Empfänger (1; 2) Informationen in eine Rahmen- und Zeitschlitzstruktur (3, 4) eingebettet übertragen werden,
**dadurch gekennzeichnet,**
**daß** der Empfänger (1; 2) derart ausgestaltet ist, daß er in mehreren aufeinanderfolgenden Zeitschlitzen (4) eine identische Leistungseinstellinformation (6) an den Sender (2;1) überträgt, wobei für die zu übertragende Leistungseinstellinformation (6) nicht erneut das von dem Empfänger (1; 2) empfangene Signal des Senders (2; 1) ausgewertet wird, sondern stattdessen die Leistungseinstellinformation (6) des vorhergehenden Zeitschlitzes wiederholt wird.

13. Funksystem nach Anspruch 12,
wobei in einem bestimmten Rahmen (3) die Informationen in komprimierter Form übertragen werden, so daß innerhalb dieses Rahmens (3) ein nicht mit Informationen belegter Abschnitt (9) vorhanden ist,
**dadurch gekennzeichnet,**
**daß** der Empfänger (1; 2) derart ausgestaltet ist, daß er nach einem nicht mit Informationen belegten Abschnitt (9) eines Rahmens (3) in mehreren darauffolgenden Zeitschlitzen (4) eine identische Leistungseinstellinformation (6) an den Sender (2;1) überträgt.

14. Funksystem nach Anspruch 13,
**dadurch gekennzeichnet,**
**daß** der Empfänger (1; 2) derart ausgestaltet ist, daß er nach dem nicht mit Informationen belegten Abschnitt (9) in zwei darauffolgenen Zeitschlitzen (4) eine identische Leistungseinstellinformation (6) an den Sender (2;1 ) überträgt.

15. Funksystem nach Anspruch 14,
**dadurch gekennzeichnet,**
**daß** der Sender (2; 1) derart ausgestaltet ist, daß er die Sendeleistung in Abhängigkeit sowohl von der in dem ersten Zeitschlitz (4) nach dem nicht mit Informationen belegten Abschnitt empfangenen Leistungseinstellinformation (6) als auch von der in dem zweiten Abschnitt (9) nach dem nicht mit Informationen belegten Abschnitt (9) empfangenen Einstellinformation (6) einstellt.

16. Funksystem nach Anspruch 14 oder 15,
**dadurch gekennzeichnet,**
**daß** der Empfänger (1; 2) derart ausgestaltet ist, daß er nach der Übertragung der identischen Leistungseinstellinformation (6) in dem ersten und zweiten Zeitschlitz (4) nach dem nicht mit Informationen belegten Abschnitt (9) das von dem Empfänger (1; 2) empfangene Signal des Senders (2; 1) erneut auswertet und davon abhängig eine neue Leistungseinstellinformation erzeugt und in dem nächsten Zeitschlitz (4) an den Sender (2; 1) sendet.

17. Funksystem nach einem der Ansprüche 13-16,
**dadurch gekennzeichnet,**
**daß** der Sender (2; 1) derart ausgestaltet ist, daß er die Sendeleistung nach Empfang der in dem ersten Zeitschlitz (4) nach dem nicht mit Informationen belegten Abschnitt (9) übertragenen Leistungseinstellinformation um einen festen Betrag (ΔPₙ) verändert und nach Empfang der während des zweiten Zeitschlitzs (4) nach dem nicht mit Informationen belegten Abschnitt (9) empfangenen Leistungseinstellinformation (6) unter zusätzlicher Berücksichtigung der während des ersten Zeitschlitzes (4) nach dem nicht mit Informationen belegten Abschnitt (9) empfangenen Leistungseinstellinformation (6) einen Leistungsveränderungswert (ΔPₙ₊₁) ermittelt und die Sen-Sendeleistung in dem Sender (2; 1) entsprechend diesem Leistungsveränderungswert (ΔPₙ₊₁) verändert.

18. Funksystem nach Anspruch 17,
**dadurch gekennzeichnet,**
**daß** der feste Betrag (ΔPₙ) dem Wert Null entspricht, so daß der Sender (2; 1) nach Empfang der in dem ersten Zeitschlitz (4) nach dem nicht mit Informationen belegten Abschnitt (9) übertragenen Leistungseinstellinformation die Sendeleistung bis zum Empfang der in dem zweiten Zeitschlitzs (4) nach dem nicht mit Informationen belegten Abschnitt (9) übertragenen Leistungseinstellinformation (6) konstant hält.

19. Funksystem nach einem der Ansprüche 12-18,
**dadurch gekennzeichnet,**
**daß** der Empfänger (1; 2) derart ausgestaltet ist, daß er die Leistungseinstellinformation (6) analog abhängig von einer Abweichung eines bestimmten ausgewerteten Parameters des empfangenen Signals von einem entsprechenden Referenzwert erzeugt.

20. Funksystem nach einem der Ansprüche 13-19,
**dadurch gekennzeichnet,**
**daß** der Empfänger (1; 2) derart ausgestaltet ist, daß er auch in mehreren aufeinanderfolgenden Zeitschlitzen (4), welche nicht unmittelbar auf einen nicht mit Informationen belegten Abschnitt (9) folgen, identische Leistungseinstellinformationen (6) an den Sender (2; 1) überträgt, und
**daß** der Sender (2; 1) derart ausgestaltet ist, daß er die Sendeleistung unter Berücksichtigung der während dieser Zeitschlitze (4) empfangenen Leistungseinstellinformationen einstellt.

21. Funksystem nach einem der Ansprüche 12-20,
**dadurch gekennzeichnet,**
**daß** das Funksystem ein CDMA-Mobilfunksystem ist.

## Claims

1. Method for controlling the transmission power in a radio system,
with information being transmitted, embedded in a frame and a timeslot structure (3, 4), between a transmitter (2; 1) and a receiver (1; 2),
with a signal, which is received by the receiver (1; 2) via a transmission channel in the radio system, from the transmitter (2; 1) being evaluated and power adjustment information (6) being produced as a function of this in each timeslot (4) and being sent to the transmitter (2; 1), and
with the transmission power in the transmitter (2; 1) being adjusted as a function of the power adjustment information (6), **characterized**
**in that** identical power adjustment information (6) is transmitted from the receiver (1; 2) to the transmitter (2; 1) in a number of successive timeslots (4) with the signal quality of the transmitter (2; 1) signal received by the receiver (1; 2) not being evaluated again for the power adjustment information (6) to be transmitted, but with the power adjustment information (6) of the previous timeslot being repeated instead.

2. Method according to claim 1,
with the information being transmitted in compressed form in a specific frame (3), so that there is a section (9) which is not filled with information within this frame (3),
**characterized**
**in that**, following a section (9) of a frame (3) which is not filled with information, the receiver (1; 2) transmits identical power adjustment information (6) to the transmitter (2; 1) in a number of successive timeslots (4).

3. Method according to claim 2,
**characterized**
**in that**, following the section (9) which is not filled with information, the receiver (1; 2) transmits identical power adjustment information (6) to the transmitter (2; 1) in two successive timeslots (4).

4. Method according to claim 3,
**characterized**
**in that** the transmission power in the transmitter (2; 1) is adjusted as a function of both power adjustment information (6) received in the first timeslot (4) following the section which is not filled with information, and power adjustment information (6) which is received in the second section (9) following the section (9) which is not filled with information.

5. Method according to claim 3 or 4,
**characterized**
**in that** the signal received by the receiver (1; 2) from the transmitter (2; 1) is evaluated once again only after the transmission of the identical power adjustment information (6) in the first and second timeslots (4) following the section (9) which is not filled with information, and new power adjustment information is produced as a function of this, and is sent to the transmitter (2; 1) in the next timeslot (4).

6. Method according to one of claims 3-5,
**characterized**
**in that** the transmission power in the transmitter (2; 1) is changed by a fixed amount (ΔPₙ) after receiving the power adjustment information transmitted in the first timeslot (4) following the section (9) which is not filled with information, and in that, after receiving the power adjustment information (6) transmitted during the second timeslot (4) following the section (9) which is not filled with information, and taking account of the power adjustment information (6) transmitted during the first timeslot (4) following the section (9) which is not filled with information, a power change value (ΔPₙ₊₁) is determined, and the transmission power in the transmitter (2; 1) is changed in accordance with this power change value (ΔPₙ₊₁) relative to the transmission power (Pₙ₋₁) set prior to the first change.

7. Method according to claim 6,
**characterized**
**in that** the fixed magnitude (ΔPₙ) corresponds to the value zero.

8. Method according to one of the preceding claims,
**characterized**
**in that**, in the receiver (1; 2), the power adjustment information (6) is produced analogously as a function of the discrepancy between a specific evaluated parameter in the received signal and a corresponding reference value.

9. Method according to one of the claims 2-8,
**characterized**
**in that** identical power adjustment information (6) is also transmitted to the transmitter (2; 1) in a number of successive timeslots (4) which do not immediately follow the section (9) which is not filled with information, and
**in that** the transmission power in the transmitter (2; 1) is adjusted taking account of the power adjustment information received during these timeslots (4).

10. Method according to one of claims 2-9,
**characterized**
**in that** identical power adjustment information (6) is transmitted to the transmitter (2; 1) a number of times in successive timeslots (4) following a section (9) which is not filled with information, with the number of repetitions being different on each occasion.

11. Method according to one of the preceding claims,
**characterized**
**in that** the method is used during a soft handover in the mobile radio system.

12. Radio system,
having a transmitter (2; 1), and
having a receiver (1; 2) for receiving a signal, which is transmitted via a transmission channel in the radio system, from the transmitter (2; 1), and for evaluating the received signal in order to produce power adjustment information (6) as a function of it, and to send this information (6) to the transmitter (2; 1),
with the transmitter (2; 1) being designed such that it adjusts the transmission power as a function of the power adjustment information from the receiver (1; 2),
with information being transmitted, embedded in a frame and a timeslot structure (3, 4), between the transmitter (2; 1) and the receiver (1; 2), with a signal,
**characterized**
**in that** the receiver (1; 2) is designed such that it transmits identical power adjustment information (6) to the transmitter (2; 1) in a number of successive timeslots (4) with the signal quality of the transmitter (2; 1) signal received by the receiver (1; 2) not being evaluated again for the power adjustment information (6) to be transmitted, but with the power adjustment information (6) of the previous timeslot being repeated instead.

13. Radio system according to claim 12,
with the information being transmitted in compressed form in a specific frame (3), so that there is a section (9) which is not filled with information within this frame (3),
**characterized**
**in that** the receiver (1; 2) is designed such that it transmits identical power information (6) to the transmitter (2; 1) in a number of successive timeslots (4) following a section (9) which is not filled with information in a frame (3).

14. Radio systems according to claim 13,
**characterized**
**in that** the receiver (1; 2) is designed such that it transmits identical power adjustment information (6) to the transmitter (2; 1) in two successive timeslots (4) following the section (9) which is not filled with information.

15. Radio system according to claim 14,
**characterized**
**in that** the transmitter (2; 1) is designed such that it adjusts the transmission power as a function of both power adjustment information (6) received in the first timeslot (4) following the section which is not filled with information, and power adjustment information (6) which is received in the second section (9) following the section (9) which is not filled with information.

16. Radio system according to claim 14 or 15,
**characterized**
**in that** the receiver (1; 2) is designed such that it once again evaluates the signal, received by the receiver (1; 2) from the transmitter (2; 1) after the transmission of the identical power adjustment information (6) in the first and second timeslots (4) following the section (9) which is not filled with information, and produces new power adjustment information as a function of this, and sends this information to the transmitter (2; 1) in the next timeslot (4).

17. Radio system according to one of claims 13-16,
**characterized**
**in that** the transmitter (2; 1) is designed such that it changes the transmission power by a fixed amount (ΔPₙ) after receiving the power adjustment information transmitted in the first timeslot (4) following the section (9) which is not filled with information and, after receiving the power adjustment information (6) received during the second timeslot (4) following the section (9) which is not filled with information, and, additionally taking account of the power adjustment information (6) received during the first timeslot (4) following the section (9) which is not filled with information, it determines a power change value (ΔPₙ₊₁), and changes the transmission power in the transmitter (2; 1) in accordance with this power change value (ΔPₙ₊₁).

18. Radio system according to claim 17,
**characterized**
**in that** the fixed amount (ΔPₙ) corresponds to the value zero, so that after receiving the power adjustment information transmitted in the first timeslot (4) following the section (9) which is not filled with information, the transmitter (2; 1) keeps the transmission power constant until reception of the power adjustment information (6) transmitted in the second timeslot (4) following the section (9) which is not filled with information.

19. Radio system according to one of claims 12-18,
**characterized**
**in that** the receiver (1; 2) is designed such that it produces the power adjustment information (6) analogously as a function of the discrepancy between a specific evaluated parameter in the received signal and a corresponding reference value.

20. Radio system according to one of claims 13-19,
**characterized**
**in that** the receiver (1; 2) is designed such that it also transmits identical power adjustment information (6) to the transmitter (2; 1) in a number of successive timeslots (4) which do not directly follow a section (9) which is not filled with information, and in that the transmitter (2; 1) is designed such that it adjusts the transmission power taking account of the power adjustment information received during these timeslots (4).

21. Radio system according to one of claims 12-20,
**characterized**
**in that** the radio system is a CDMA mobile radio system.

## Revendications

1. Procédé de réglage de la puissance d'émission dans un système radio, des informations étant transmises de manière intégrée dans une structure de trames et de créneaux temporels (3, 4) entre un émetteur (2; 1) et un récepteur (1; 2), un signal de l'émetteur (2; 1) reçu par le récepteur (1; 2 ) via un canal de transmission du système radio étant évalué et, en fonction de cela, une information d'ajustage de la puissance (6) étant générée dans chaque créneau temporel (4) et envoyée à l'émetteur (2; 1) et la puissance d'émission étant, dans l'émetteur (2; 1), ajustée en fonction de l'information d'ajustage de la puissance (6), **caractérisé en ce qu'**une information identique d'ajustage de la puissance (6) est transmise à l'émetteur (2; 1) par le récepteur (1; 2) dans plusieurs créneaux temporels (4) successifs, la distance signal/bruit du signal de l'émetteur (2; 1) reçu par le récepteur (1; 2) n'étant pas évaluée de nouveau pour l'information d'ajustage de la puissance (6) à transmettre, mais, au lieu de cela, l'information d'ajustage de la puissance (6) du créneau temporel précédent étant répétée.

2. Procédé selon la revendication 1, les informations étant transmises sous forme compressée dans une trame déterminée (3) de sorte qu'on a une partie (9) non occupée par des informations dans cette trame (3), **caractérisé en ce qu'**une information identique d'ajustage de la puissance (6) est transmise à l'émetteur (2; 1) par le récepteur (1; 2) après une partie (9), non occupée par des informations, d'une trame (3) dans plusieurs créneaux temporels (4) qui font suite.

3. Procédé selon la revendication 2, **caractérisé en ce qu'**une information identique d'ajustage de la puissance (6) est transmise à l'émetteur (2; 1) par le récepteur (1; 2) après la partie (9) non occupée par des informations dans deux créneaux temporels (4) qui font suite.

4. Procédé selon la revendication 3, **caractérisé en ce que** la puissance d'émission, dans l'émetteur (2; 1), est ajustée en fonction non seulement de l'information d'ajustage de la puissance (6) reçue dans le premier créneau temporel (4) après la partie non occupée par des informations, mais aussi de l'information d'ajustage de la puissance (6) reçue dans la deuxième partie (9) après la partie non occupée par des informations (9).

5. Procédé selon la revendication 3 ou 4, **caractérisé en ce que** le signal de l'émetteur (2; 1) reçu par le récepteur (1; 2) n'est évalué de nouveau qu'après la transmission de l'information identique d'ajustage de la puissance (6) dans les premier et deuxième créneaux temporels (4) après la partie (9) non occupée par des informations et, en fonction de cela, une nouvelle information d'ajustage de la puissance est générée et envoyée à l'émetteur (2; 1) dans le créneau temporel (4) suivant.

6. Procédé selon l'une des revendications 3 à 5, **caractérisé en ce que** la puissance d'émission, dans l'émetteur (2; 1), est modifiée d'une valeur fixe (ΔPₙ) après la réception de l'information d'ajustage de la puissance transmise dans le premier créneau temporel (4) après la partie (9) non occupée par des informations et **en ce que**, après la réception de l'information d'ajustage de la puissance (6) transmise pendant le deuxième créneau temporel (4) après la partie (9) non occupée par des informations, une valeur de modification de la puissance (ΔPₙ₊₁) est déterminée compte tenu de l'information d'ajustage de la puissance (6) transmise pendant le premier créneau temporel (4) après la partie (9) non occupée par des informations et la puissance d'émission, dans l'émetteur (2; 1), est modifiée conformément à cette valeur de modification de la puissance (ΔPₙ₊₁) relativement à la puissance d'émission (Pₙ₋₁) ajustée avant la première modification.

7. Procédé selon la revendication 6, **caractérisé en ce que** la valeur fixe (ΔPₙ) correspond à la valeur zéro.

8. Procédé selon l'une des revendications précédentes, **caractérisé en ce que** l'information d'ajustage de la puissance (6), dans le récepteur (1; 2), est générée de manière analogique, en fonction de l'écart d'un paramètre évalué déterminé du signal reçu par rapport à une valeur de référence correspondante.

9. Procédé selon l'une des revendications 2 à 8, **caractérisé en ce que** des informations identiques d'ajustage de la puissance (6) sont également transmises à l'émetteur (2; 1), dans plusieurs créneaux temporels (4) successifs qui ne font pas directement suite à une partie (9) non occupée par des informations, et **en ce que** la puissance d'émission, dans l'émetteur (2; 1), est ajustée compte tenu des informations d'ajustage de la puissance reçues pendant ces créneaux temporels (4).

10. Procédé selon l'une des revendications 2 à 9, **caractérisé en ce qu'**une information identique d'ajustage de la puissance (6) est transmise à l'émetteur (2; 1) après une partie (9) non occupée par des informations, plusieurs fois dans des créneaux temporels (4) successifs, le nombre des répétitions étant chaque fois différent.

11. Procédé selon l'une des revendications précédentes, **caractérisé en ce que** le procédé est appliqué pendant un Soft Handover dans le système radio mobile.

12. Système radio avec un émetteur (2; 1) et un récepteur (1; 2) pour recevoir un signal de l'émetteur (2; 1) transmis sur un canal de transmission du système radio et pour évaluer le signal reçu pour, en fonction de cela, générer une information d'ajustage de la puissance (6) et l'envoyer à l'émetteur (2; 1), l'émetteur (2; 1) étant réalisé de manière telle qu'il ajuste la puissance d'émission en fonction de l'information d'ajustage de la puissance du récepteur (1; 2), des informations étant transmises de manière intégrée dans une structure de trames et de créneaux temporels (3, 4) entre l'émetteur (2; 1) et le récepteur (1; 2), **caractérisé en ce que** le récepteur (1; 2) est réalisé de manière telle qu'il transmet une information identique d'ajustage de la puissance (6) à l'émetteur (2; 1) dans plusieurs créneaux temporels (4) successifs, la distance signal/bruit du signal de l'émetteur (2; 1) reçu par le récepteur (1; 2) n'étant pas évaluée de nouveau pour l'information d'ajustage de la puissance (6) à transmettre, mais, au lieu de cela, l'information d'ajustage de la puissance (6) du créneau temporel précédent étant répétée.

13. Système radio selon la revendication 12, les informations étant transmises sous forme compressée dans une trame déterminée (3) de sorte qu'on a une partie (9) non occupée par des informations dans cette trame (3), **caractérisé en ce que** le récepteur (1; 2) est réalisé de manière telle qu'il transmet une information identique d'ajustage de la puissance (6) à l'émetteur (2; 1) après une partie (9), non occupée par des informations, d'une trame (3) dans plusieurs créneaux temporels (4) qui font suite.

14. Système radio selon la revendication 13, **caractérisé en ce que** le récepteur (1; 2) est réalisé de manière telle qu'il transmet une information identique d'ajustage de la puissance (6) à l'émetteur (2; 1) après la partie (9) non occupée par des informations dans deux créneaux temporels (4) qui font suite.

15. Système radio selon la revendication 14, **caractérisé en ce que** l'émetteur (2; 1) est réalisé de manière telle qu'il ajuste la puissance d'émission en fonction non seulement de l'information d'ajustage de la puissance (6) reçue dans le premier créneau temporel (4) après la partie non occupée par des informations, mais aussi de l'information d'ajustage de la puissance (6) reçue dans la deuxième partie (9) après la partie (9) non occupée par des informations.

16. Système radio selon la revendication 14 ou 15, **caractérisé en ce que** le récepteur (1; 2) est réalisé de manière telle qu'il évalue de nouveau le signal de l'émetteur (2; 1) reçu par le récepteur (1; 2) après la transmission de l'information identique d'ajustage de la puissance (6) dans les premier et deuxième créneaux temporels (4) après la partie (9) non occupée par des informations et, en fonction de cela, génère une nouvelle information d'ajustage de la puissance et l'envoie à l'émetteur (2; 1) dans le créneau temporel suivant (4).

17. Système radio selon l'une des revendications 13 à 16, **caractérisé en ce que** l'émetteur (2; 1) est réalisé de manière telle qu'il modifie la puissance d'émission d'une valeur fixe (ΔPₙ) après la réception de l'information d'ajustage de la puissance transmise dans le premier créneau temporel (4) après la partie (9) non occupée par des informations et, après la réception de l'information d'ajustage de la puissance (6) reçue pendant le deuxième créneau temporel (4) après la partie (9) non occupée par des informations, détermine une valeur de modification de la puissance (ΔPₙ₊₁) compte tenu, additionnellement, de l'information d'ajustage de la puissance (6) reçue pendant le premier créneau temporel (4) après la partie (9) non occupée par des informations et modifie la puissance d'émission, dans l'émetteur (2; 1), conformément à cette valeur de modification de la puissance (ΔPₙ₊₁) .

18. Système radio selon la revendication 17, **caractérisé en ce que** la valeur fixe (ΔPₙ) correspond à la valeur zéro de sorte que l'émetteur (2; 1), après la réception de l'information d'ajustage de la puissance transmise dans le premier créneau temporel (4) après la partie (9) non occupée par des informations, maintient constante la puissance d'émission jusqu'à la réception de l'information d'ajustage de la puissance (6) transmise dans le deuxième créneau temporel (4) après la partie (9) non occupée par des informations.

19. Système radio selon l'une des revendications 12 à 18, **caractérisé en ce que** le récepteur (1; 2) est réalisé de manière telle qu'il génère l'information d'ajustage de la puissance (6) de manière analogique en fonction d'un écart d'un paramètre évalué déterminé du signal reçu par rapport à une valeur de référence correspondante.

20. Système radio selon l'une des revendications 13 à 19, **caractérisé en ce que** le récepteur (1; 2) est réalisé de manière telle qu'il transmet également des informations identiques d'ajustage de la puissance (6) à l'émetteur (2; 1) dans plusieurs créneaux temporels (4) successifs qui ne font pas directement suite à une partie (9) non occupée par des informations, et **en ce que** l'émetteur (2; 1) est réalisé de manière telle qu'il ajuste la puissance d'émission compte tenu des informations d'ajustage de la puissance reçues pendant ces créneaux temporels (4).

21. Système radio selon l'une des revendications 12 à 20, **caractérisé en ce que** le système radio est un système radio mobile CDMA.
